# EUROPEAN PATENT SPECIFICATION

(11) **EP 2 135 754 B1**
(45) Date of publication and mention of the grant of the patent: **28.03.2012**
(21) Application number: 09006018.7
(22) Date of filing: 30.04.2009
(51) Int. Cl.: B60C 19/00

(54) **Tire noise reduction device and pneumatic tire having the same mounted thereon**
Reifenlärmverringerungsvorrichtung und Luftreifen versehen mit einer solchen Vorrichtung
Dispositif de réduction sonore de pneu et pneu doté de celui-ci

(30) Priority: 20.06.2008 JP 2008161664
(43) Date of publication of application: 23.12.2009
(73) Proprietor: The Yokohama Rubber Co., Ltd., Minato-ku Tokyo 105-8685 (JP)
(72) Inventor: Kuramori, Akira, Hiratsuka-shi Kanagawa 254-8601 (JP); Tanno, Atsushi, Hiratsuka-shi Kanagawa 254-8601 (JP)
(74) Representative: HOFFMANN EITLE

(56) References cited:
- WO-A-2006/118198
- JP-A- 2004 168 212
- JP-A- 2008 254 658

## Description

### TECHNICAL FIELD

The present invention relates to a tire noise reduction device and a pneumatic tire with the tire noise reduction device mounted thereon.

### TECHNICAL BACKGROUND

Conventionally, it has been widely known that a sound absorbing body made of a porous material is arranged on the inner surface of a tread portion of a tire in order to reduce cavity resonance noise generated in the tire cavity during travel. Various approaches have been proposed for fixing the sound absorbing body on the inner surface of the tread portion. Among those approaches, a tire noise reduction device is disclosed in Japanese patent application Kokai publication No. 2006-306285 which discloses a tire according to the preamble of claim 1. In the tire noise reduction device, a sound absorbing body is fixed to a belt-shaped band member made of a thermoplastic resin, then, the belt-shaped band member is bent into an annular shape, and the sound absorbing member is attached to the inner surface of a tread portion by pressure of elastic restoring force of the band member. Thus, attaching and removing operations of the sound absorbing member can be easily performed.

However, when the tire noise reduction device is used in an extremely cold place, the band member made of the thermoplastic resin undergoes brittle fracture due to the low temperature. This causes a problem that the sound absorbing body is separated from the inner surface of the tread portion. Thus, the tire noise reduction device has a problem, in an extremely cold place, of not fulfilling the intrinsic function as a tire noise reduction device.

US 2009/0199942 A1 relates to a pneumatic tire which comprises a resin layer and a noise absorbing member. The resin layer is formed as a layer attached on the entire inner surface of the pneumatic tire. The resin layer fixes the noise absorbing member by adhesion to the inner surface of the pneumatic tire.

### SUMMARY OF THE INVENTION

A tire noise reduction device of the present invention includes: a sound absorbing body made of a porous material; a band member which holds the sound absorbing body. In the tire noise reduction device, the sound absorbing body is mounted on the tire inner surface by utilizing elastic restoring force of the band member bent into an annular shape, and the band member is made of a thermoplastic elastomer composition containing an elastomer dispersed in a thermoplastic resin.

An advantage obtainable with embodiments of the present invention is to provide a tire noise reduction device with excellent low temperature performances and a pneumatic tire including the tire noise reduction device mounted thereon, the tire noise reduction device including a sound absorbing body prevented from separating from the inner surface of the tread portion even when the tire noise reduction device is used in an extremely cold place.

In addition, the tire noise reduction device configured above of the present invention preferably has one or more characteristics as described in the following items (1) to (7):
(1) The band member is arranged on one surface of the sound absorbing body, locking members are arranged at intervals in a direction corresponding to a circumferential direction of the band member, on the other surface of the sound absorbing body, and the locking members penetrate the sound absorbing body and are thermally welded to the band member.
(2) The locking members are made of a thermoplastic elastomer composition containing an elastomer dispersed in a thermoplastic resin.
(3) The locking members are made of the same kind of thermoplastic elastomer composition as that of the band member.
(4) A difference between a melting point of the locking members and that of the band member is 20°C or less.
(5) A flexural rigidity of the band member is 7.5 Nm² to 34.0 Nm².
(6) The sound absorbing body is an annular body continuously and integrally formed in a circumferential direction thereof.
(7) The sound absorbing body is made of a plurality of separate pieces divided in a circumferential direction thereof, and the separate pieces are arranged at intervals on the band member in the circumferential direction thereof.

Meanwhile, a pneumatic tire of the present invention includes the aforementioned tire noise reduction device mounted on an inner surface of a tread portion.

According to the aforementioned present invention, the annular band member which fixes the sound absorbing body mounted on the tire inner surface is made of the thermoplastic elastomer composition containing an elastomer dispersed in a thermoplastic resin. This thermoplastic elastomer composition has a glass transition point sufficiently lower than that of a thermoplastic resin. Thus, the band member does not undergo brittle fracture even when the tire is used in an extremely cold place. This can prevent the sound absorbing body from separating from the inner surface of the tread portion, and thus the intrinsic noise reduction effect can be exhibited.

### BRIEF DESCRIPTION OF THE DRAWINGS

To enable a better understanding of the present invention, and to show how the same may be carried into effect, reference will now be made, by way of example only, to the accompanying drawings, in which:-
Fig. 1 is a cross-sectional view showing a tire noise reduction device according to an embodiment of the present invention mounted in a pneumatic tire;
Fig. 2a is a partial side view showing a tire noise reduction device according to another embodiment of the present invention spread flat;
Fig. 2b is a partial plan view showing a tire noise reduction device according to another embodiment of the present invention spread flat;
Fig. 3a to Fig. 3c are partial cross-sectional views showing a series of steps in thermal-welding a locking member to a band member according to the embodiment of the present invention; and
Fig. 4a and Fig. 4b are perspective views each showing a tire noise reduction device according to the embodiment of the present invention.

### DETAILED DESCRIPTION OF PREFERRED EMBODIMENTS OF THE PRESENT INVENTION

Hereinafter, an embodiment of the present invention will be described in detail with reference to the accompanying drawings.

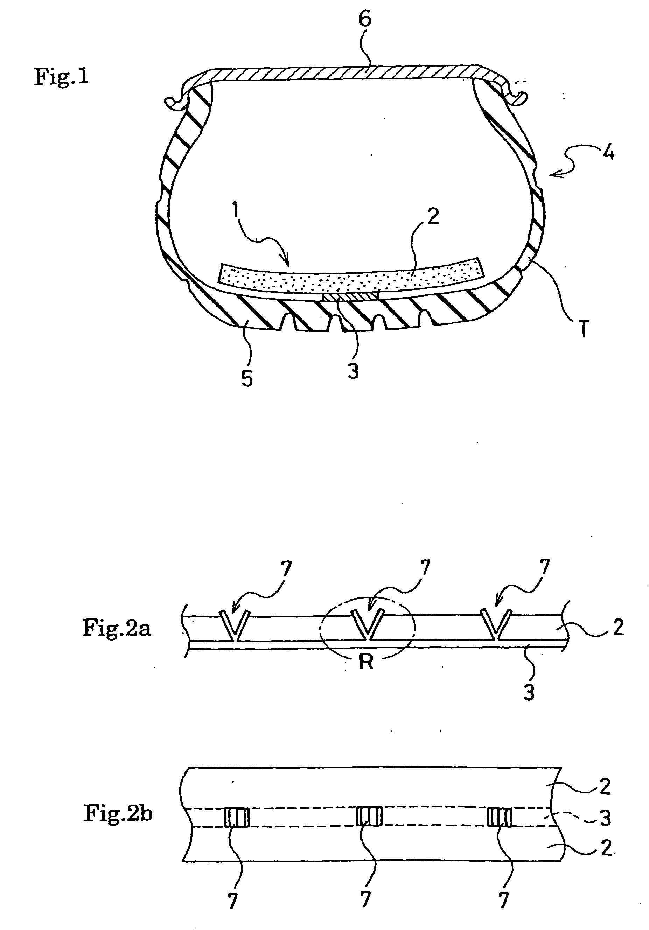

Fig. 1 is a cross-sectional view showing a tire noise reduction device according to an embodiment of the present invention mounted in a pneumatic tire. As shown in Fig. 1, a tire noise reduction device 1 includes a sound absorbing body 2 and a band member 3. The sound absorbing body 2 is made of a porous material as an annular body continuously formed in the tire circumferential direction. The band member 3 bonds and holds the sound absorbing body 2 along the outer circumferential surface of the sound absorbing body 2. The band member 3 holding the sound absorbing body 2 is bent into an annular shape. The sound absorbing body 2 is mounted on the inner surface of a tread portion 5 of a pneumatic tire 4 by elastic restoring force of the bent band member 3. The reference numeral 6 in the drawing denotes a rim.

In the tire noise reduction device 1 of the present invention, the bandmember 3 is made of a thermoplastic elastomer. A thermoplastic elastomer represents a substance in which an elastomer is dispersed in a thermoplastic resin. As described above, the band member 3 is made of a material of a thermoplastic elastomer composition containing an elastomer dispersed in a thermoplastic resin, instead of the conventional material of a thermoplastic resin. As a result, the band member 3 does not undergo brittle fracture because of low temperature performances of the thermoplastic elastomer composition, even when the tire noise reduction device is used in an extremely cold place. This can prevent the sound absorbing body 2 from separating from the inner surface of the tread portion 5, and thus the tire noise reduction device 1 can exhibit the intrinsic noise reduction effect.

Examples of the thermoplastic resin preferably used to make the aforementioned thermoplastic elastomer composition include: polyamide resins (for example, nylon 6 (N6), nylon 66 (N66), nylon 46 (N46), nylon 11 (N11), nylon 12 (N12), nylon 610 (N610), nylon 612 (N612), nylon 6/66 copolymers (N6/66), nylon 6/66/610 copolymers (N6/66/610), nylon MXD6 (MXD6), nylon 6T, nylon 6/6T copolymers, nylon 66/PP copolymers, and nylon 66/PPS copolymers); their N-alkoxyalkylated products (for example, methoxymethylated nylon 6, methoxymethylated nylon 6/610 copolymers, and methoxymethylated nylon 612); polyester resins (for example, aromatic polyesters, such as polybutylene terephthalate (PBT), polyethylene terephthalate (PET), polyethylene isophthalate (PEI), PET/PEI copolymers, polyarylate (PAR), polybutylene naphthalate (PBN), liquid crystal polyester, and polyoxyalkylene diimide diacid/polybutylene terephthalate copolymers); polynitrile resins (for example, polyacrylonitrile (PAN), polymethacrylonitrile, acrylonitrile/styrene copolymers (AS), (meth)acrylonitrile/styrene copolymers, and (meth)acrylonitrile/styrene/butadiene copolymers); polymethacrylate resins (for example, polymethyl methacrylate (PMMA), polyethylmethacrylate); polyvinyl resins (for example, polyvinyl acetate, polyvinyl alcohol (PVA), vinyl alcohol/ethylene copolymers (EVOH), polyvinylidene chloride (PVDC), polyvinyl chloride (PVC), vinyl chloride/vinylidene chloride copolymers, vinylidene chloride/methyl acrylate copolymers, vinylidene chloride/acrylonitrile copolymers); cellulose resins (for example, cellulose acetate, and cellulose acetate butyrate); fluororesins (for example, polyvinylidene fluoride (PVDF), polyvinyl fluoride (PVF), polychlorotrifluoroethylene (PCTFE), and ethylene/tetrafluoroethylene (ETFE) copolymers); and imide resins (for example, aromatic polyimide (PI)).

Meanwhile, examples of the elastomer preferably used to make the aforementioned thermoplastic elastomer composition include: diene rubbers and their hydrogenated products (for example, natural rubbers (NR) , isoprene rubber (IR), epoxidized natural rubbers, styrene-butadiene rubber (SBR), butadiene rubbers (BR, high-cis BR and low-cis BR), nitrile rubber (NBR), hydrogenated NBR, and hydrogenated SBR); olefin rubbers (for example, ethylene propylene rubbers (EPDM and EPM), maleic acid-modified ethylene propylene rubber (M-EPM), butyl rubber (IIR), copolymers of isobutylene and aromatic vinyl or diene monomer, acrylic rubber (ACM), and ionomers); halogen-containing rubbers (for example, Br-IIR, Cl-IIR, brominated isobutylene-p-methylstyrene copolymers (Br-IPMS), chloroprene rubber (CR), hydrin rubber (CHR), chlorosulfonated polyethylene rubber(CSM),chlorinated polyethylene rubber (CM), and maleic acid-modified chlorinated polyethylene rubber (M-CM)) ; silicone rubbers (for example, methyl vinyl silicone rubber, dimethyl silicone rubber, and methylphenylvinyl silicone rubber); sulfur-containing rubbers (for example, polysulfide rubber); fluororubbers (for example, vinylidene fluoride rubbers, fluorine-containing vinyl ether rubbers, tetrafluoroethylene-propylene rubbers, fluorine-containing silicone rubbers, and fluorine-containing phosphazene rubbers); and thermoplastic elastomers (for example, styrene elastomers, olefin elastomers, ester elastomers, urethane elastomers, and polyamide elastomers).

If a particular thermoplastic resin among those described above is incompatible with such an elastomer, a compatibilizer may be used as a third component appropriately to make the two compatible with each other. By mixing such a compatibilizer into the blend system of the thermoplastic resin and the elastomer, the interfacial tension between the thermoplastic resin and the elastomer is reduced. As a result, the rubber particles constituting the dispersion phase is made finer, so that both components can exhibit their characteristics more effectively. In general, such a compatibilizer has a copolymer structure of at least one of the thermoplastic resin and the elastomer, or a copolymer structure having an epoxy group, a carbonyl group, a halogen group, an amino group, an oxazoline group, or a hydroxyl group, which is capable of reacting with the thermoplastic resin or the elastomer. The compatibilizer can be selected depending on the type of the thermoplastic resin and the elastomer to be mixed therewith. Examples of the compatibilizer normally used herein include styrene/ethylene-butylene-styrene block copolymers (SEBS) and their maleic acid-modified products, EPDM, EPM, EPDM/styrene or EPDM/acrylonitrile graft copolymers and their maleic acid-modified products, styrene/maleic acid copolymers, reactive phenoxine, and the like. The blending proportion of such a compatibilizer is not particularly limited. The blending proportion of such a compatibilizer may preferably be 0.5 to 10 parts by weight relative to 100 parts by weight of the polymer components (the total amount of the thermoplastic resin and the elastomer).

The component ratio of the aforementioned thermoplastic resin to the aforementioned elastomer is not particularly limited. The component ratio of the aforementioned thermoplastic resin to the aforementioned elastomer may be appropriately set so as to have a structure in which the elastomer is dispersed as a discontinuous phase in a matrix of the thermoplastic resin. The component ratio of the aforementioned thermoplastic resin to the aforementioned elastomer is preferably 90/10 to 30/70 in weight ratio.

The aforementioned thermoplastic resin and the aforementioned elastomer may be mixed with another polymer, for example, the above-described compatibilizer. The purposes of mixing such a polymer are to improve the compatibility between the thermoplastic resin and the elastomer, to improve the molding processability of the material for the film, to improve the heat resistance, to reduce cost, and so on. Examples of the material used for the polymer include polyethylene(PE), polypropylene (PP), polystyrene (PS), ABS, SBS, and polycarbonate (PC). In addition, a filler (calcium carbonate, titanium oxide, alumina, or the like) generally blended with a polymer blend, a reinforcement such as carbon black and white carbon, a softener, a plasticizer, a processing aid, a pigment, a dye, an antidegradant, or the like can be blended optionally with the inner liner layer as long as such an agent does not harm the characteristic required as the band member 3.

The thermoplastic elastomer composition thus obtained has a structure in which the elastomer component is dispersed as a discontinuous phase in the matrix of the thermoplastic resin. By adopting such a structure, it becomes possible to mount the thermoplastic elastomer composition with both sufficient flexibility and sufficient stiffness that is attributed to the effect of the resin layer as the continuous phase. Furthermore, it becomes possible to obtain, in molding, a molding processability equivalent to the case of a thermoplastic resin regardless of the amount of elastomer component.

When mixed with the thermoplastic resin, the aforementioned elastomer can be dynamically vulcanized. When the aforementioned elastomer is dynamically vulcanized, a vulcanizer, a vulcanization assistant, vulcanization conditions (temperature and time), and the like, can be determined as appropriate in accordance with the composition of the elastomer to be added, and are not particularly limited.

As the vulcanizer, a generally-available rubber vulcanizer (crosslinking agent) can be used. Specifically, examples of a sulfur-based vulcanizer include a sulfur powder, precipitated sulfur, highly dispersible sulfur, surface-treated sulfur, non-soluble sulfur, dimorpholin disulfide, and alkylphenol disulfide. Such a vulcanizer can be used in an amount of, for example, approximately 0.5 to 4 phr. Herein, "phr" refers to parts by weight per 100 parts by weight of the elastomer component.

As necessary, a vulcanization acceleratormaybe added. Examples of the vulcanization accelerator are aldehyde-ammonia-based, guanidine-based, thiazole-based, sulfenamide-based, thiuram-based, dithioic acid salt-based, and thiourea-based vulcanization accelerators which are generally available. The amount of the vulcanization accelerator used is for example, approximately 0.5 to 2 phr.

Additionally, a vulcanization accelerator assistant which is generally-used for a rubber can also be used. For example, zinc white (approximately 5 phr), stearic acid, oleic acid and their Zn salts (approximately 2 to 4 phr), or the like can be used.

The method for producing the thermoplastic elastomer composition is as follows. The thermoplastic resin and the elastomer (unvulcanized one in the case of rubber) are melt-kneaded in advance by a bi-axial kneader/extruder or the like. The elastomer is dispersed as a dispersion phase (domain) in the thermoplastic resin forming a continuous phase (matrix). When the elastomer is vulcanized, the vulcanizer can be added during the kneading process to dynamically vulcanize the elastomer. Although the various compounding agents (except for vulcanizer) may be added to the thermoplastic resin or the elastomer during the kneading process, it is preferable to premix the compounding agents before the kneading process. The kneader used for kneading the thermoplastic resin and the elastomer is not particularly limited. For example, a screw extruder, kneader, Banbury Mixer, bi-axial kneader/extruder, or the like can be used as the kneader. Among these, a bi-axial kneader/extruder is preferably used for kneading the thermoplastic resin and the elastomer and for dynamically vulcanizing the elastomer. Furthermore, two or more types of kneaders can be used to successively knead the thermoplastic resin and the elastomer. As the condition for the melt kneading, the temperature should be at a temperature at which the thermoplastic resin melts or at a higher temperature. The shear rate at the time of kneading is preferably 1000 to 7500 sec⁻¹. The overall kneading time is 30 seconds to 10 minutes. When the vulcanizer is added, the vulcanization time after the addition is preferably 15 seconds to 5 minutes. The polymer composition produced by the above method can be formed into a desired shape by a generally-used method for forming a thermoplastic resin such as injection molding and extrusion molding.

In the tire noise reduction device 1, the sound absorbing body 2 and the band member 3 may be fixed to each other with an adhesive agent, an adhesive tape or the like. However, the porous material forming the sound absorbing body 2 may be degraded by reaction with a component of the adhesive agent or the adhesive tape in some cases. Thus, the sound absorbing body 2 and the band member 3 are preferably fixed to each other with locking members in a manner to be described later.

Specifically, as shown in Fig. 1 and Figs. 2a and 2b, the band member 3 is arranged on one surface (in the drawings, the outer circumferential surface) of the sound absorbing body 2. After that, the sound absorbing body 2 may be fixed by locking members 7 which penetrate the sound absorbing body 2 from the other surface (in the drawings, the inner circumferential surface) of the sound absorbing body 2. The locking members 7 are arranged at intervals in a direction corresponding to the circumferential direction of the band member 3. In addition, the locking member 7 and the band member 3 may be fixed to each other by thermal-welding.

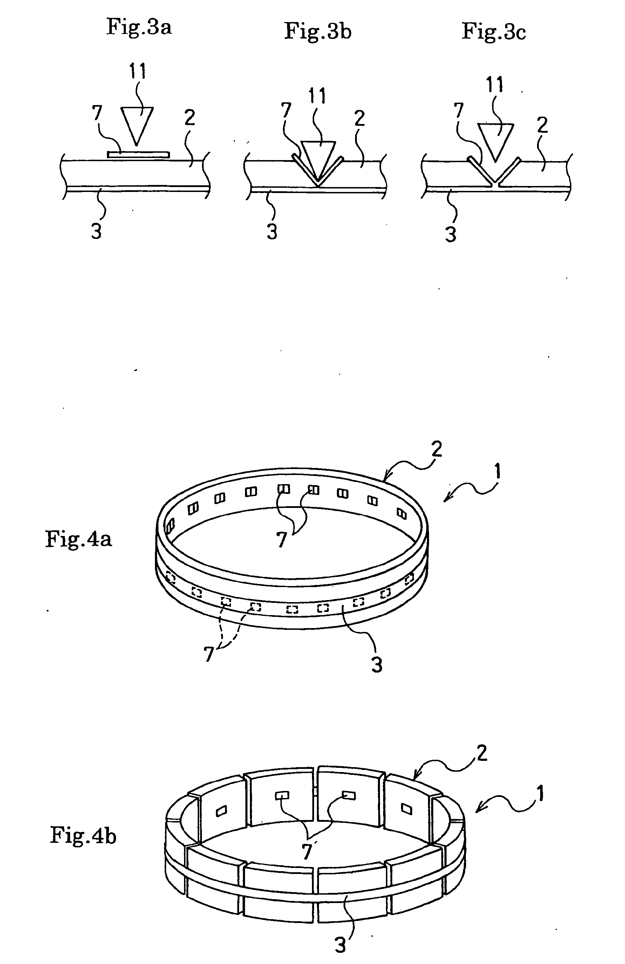

Figs. 3a to 3c show an example of a thermal-welding method for the locking member 7 and the band member 3 in the R portion in Fig. 2a. First, as shown in Fig. 3a, the plate-shaped locking member 7 is arranged on the inner circumferential surface side of the sound absorbing body 2. Next, as shown in Fig. 3b, a vibration transmitting horn 11 of an ultrasonic welder is pushed onto the locking member 7 to thereby bend the locking member 7. Then, the top of the bend of the locking member 7 is locally heated. As a result, as shown in Fig. 3c, the locking member 7 penetrates the sound absorbing body 2, and the locking member 7 and the band member 3 are thermally welded. Thus, the tire noise reduction device 1 having the structure shown in Fig. 4a can be obtained.

The aforementioned locking members 7 are preferably made of a thermoplastic elastomer composition containing an elastomer dispersed in a thermoplastic resin as similar to the band member 3. More preferably, the locking members 7 and the band member 3 are made of the same kind of thermoplastic elastomer composition. This can ensure the uniformity of the locking members 7 and the bandmember 3, and thereby can improve durability of the tire noise reduction device 1.

In this case, difference in melting point between the thermoplastic elastomer compositions forming the band member 3 and forming the locking members 7 is preferably 20°C or less. More preferably, the materials are selected so that the difference in melting point can be 10°C or less. This certainly ensures the uniformity of the locking members 7 and the band member 3.

The flexural rigidity of the band member 3 may be adjusted to 7.5 to 34.0 Nm², and preferably to 18.5 to 29.5 Nm². With such a flexural rigidity, sufficient pressure is ensured when the band member 3 is bent into an annular shape and thereby the sound absorbing body 2 is held on the inner surface of the tread portion 5. As a result, the sound absorbing body 2 can be prevented from moving on the inner surface of the tread portion 5 and can be prevented from separating from the inner surface of the tread portion 5 during travel.

The aforementioned flexural rigidity of the band member 3 is represented as the product of the elastic modulus (N/m²), obtained at 80°C, of the thermoplastic elastomer forming the band member 3 and the moment of inertia of area (m⁴) calculated from the cross-sectional area of the band member 3. Note that, in the tire noise reduction device 1, the band member 3 may have a rectangular or trapezoidal cross-sectional shape.

The aforementioned embodiment has shown a case where the sound absorbing body 2 is an annular body continuously formed in the tire circumferential direction. In the tire noise reduction device 1, however, the sound absorbing body 2 may be formed by combining multiple separate pieces, and the separate pieces may be fixed so as to be arranged at intervals on the band member 3 in the circumferential direction thereof as exemplified in Fig. 4b.

In this case, the multiple separate pieces forming the sound absorbing body 2 may have mutually different thicknesses and lengths in the circumferential direction. This can efficiently reduce the cavity resonance noise generated in the cavity of a tire.

As exemplified in Fig. 1, a pneumatic tire 4 may include the aforementioned tire noise reduction device 1 mounted on the inner surface of a tread portion 5. In the pneumatic tire 4 with such a structure, the band member 3 does not undergo brittle fracture even when the pneumatic tire 4 is used in an extremely cold place, because the band member 3 is made of a thermoplastic elastomer. This can prevent the sound absorbing body 2 from separating from the inner surface of the tread portion 5, and thus the pneumatic tire 4 can exhibit the intrinsic noise reduction effect.

Note that the aforementioned mode of the embodiment has exemplified a case where the band member 3 is arranged on the outer circumferential surface side of the sound absorbing body 2, and the locking members 7 are arranged on the inner circumferential surface side thereof. In contrast, however, the band member 3 may be arranged on the inner circumferential surface side of the sound absorbing body 2 and the locking members 7 are arranged on the outer circumferential surface side of the sound absorbing body 2.

As described above, in the tire noise reduction device 1 of the present invention, the band member 3 by which the sound absorbing body 2 is mounted and held on the tire inner surface is made of the thermoplastic elastomer composition containing an elastomer dispersed in a thermoplastic resin. Such a thermoplastic elastomer composition has a glass transition temperature significantly lower than that of a thermoplastic resin, and thus does not undergo brittle fracture even in an extremely cold environment. Accordingly, even when the tire with the tire noise reduction device 1 is used in an extremely cold place, the band member 3 does not undergo brittle fracture and thus does not cause separation of the sound absorbing body 2 because of excellent low temperature performances of the thermoplastic elastomer composition.

### [EXAMPLE]

Difference in low temperature performances of band members made of different materials is examined in the following manner. By using a thermoplastic resin (polypropylene) as the raw material, 200 band members of Conventional Example were prepared. Meanwhile, by using a thermoplastic elastomer obtained by dispersing 20 parts by weight of an elastomer (an ethylene propylene rubber) in 100 parts by weight of the thermoplastic resin (polypropylene) as the raw material, 200 band members of the present invention were also prepared. Note that all the band members of Conventional Example and of the present invention had a rectangular cross-sectional shape of 20 mm in width and 1 mm in thickness.

Then, 10 band members were selected at random from 200 band members of each of these two kinds and determined in term of "50% brittleness temperature" according to JIS K 7216. Herein, the "50% brittleness temperature" represents a temperature at which a half, i.e., 50% of the band members undergo fracture by impact deformation. Results obtained by averaging these measured values showed that the 50% brittleness temperature of the band member of Conventional Example was 0°C. In contrast, the 50% brittleness temperature of the band member of the present invention was -39°C.

These results show that the tire noise reduction devices of the present invention which employed a thermoplastic elastomer as the raw material of the band member had low temperature durability superior to that of the tire noise reduction device of the band members of Conventional Example which employed a thermoplastic resin as the raw material of the band member.

## Claims

1. A tire noise reduction device (1) comprising:
a sound absorbing body (2) made of a porous material; and a band member (3) adapted to hold the sound absorbing body (2) against a tire inner surface by elastic restoring force of the band member (3) bent into an annular shape,
**characterised in that** the band member (3) is made of a thermoplastic elastomer composition containing an elastomer dispersed in a thermoplastic resin.

2. The tire noise reduction device (1) according to claim 1, wherein
the band member (3) is arranged on one surface of the sound absorbing body (2),
a plurality of locking members (7) are arranged at intervals in a direction corresponding to a circumferential direction of the band member (3), on the other surface of the sound absorbing body (2), and
the locking members (7) penetrate the sound absorbing body (2) and are thermally welded to the band member (3).

3. The tire noise reduction device (1) according to claim 2, wherein the locking members (7) are made of a thermoplastic elastomer composition containing an elastomer dispersed in a thermoplastic resin.

4. The tire noise reduction device (1) according to claim 3, wherein the locking members (7) are made of the same kind of thermoplastic elastomer composition as that of the band member (3).

5. The tire noise reduction device (1) according to any one of claims 2 to 4, wherein a difference between a melting point of the locking members (7) and that of the band member (3) is 20°C or less.

6. The tire noise reduction device (1) according to any one of claims 1 to 5, wherein a flexural rigidity of the band member (3) is 7.5 Nm² to 34.0 Nm².

7. The tire noise reduction device (1) according to any one of claims 1 to 6, wherein the sound absorbing body (2) is an annular body continuously and integrally formed in a circumferential direction of the sound absorbing body (2).

8. The tire noise reduction device (1) according to any one of claims 1 to 7, wherein
the sound absorbing body (2) is formed of a plurality of separate pieces divided in a circumferential direction of the sound absorbing body (2), and
the separate pieces are arranged at intervals on the band member (3) in the circumferential direction.

9. A pneumatic tire comprising the tire noise reduction device (1) according to any one of claims 1 to 8 mounted on an inner surface of a tread portion (5).

## Patentansprüche

1. Reifenlärmverringerungseinrichtung (1) mit:
einem Geräuschabsorptionskörper (2), der aus einem porösen Material hergestellt ist, und mit einem Bandelement (3), das dafür angepasst ist, den Geräuschabsorptionskörper (2) gegen eine innere Reifenoberfläche durch eine elastische Rückstellkraft des Bandelements (3), das in eine ringförmige Form gebogen ist, zu halten,
**dadurch gekennzeichnet, dass**
das Bandelement aus einer thermoplastischen Elastomermischung hergestellt ist, die ein Elastomer aufweist, das in einem thermoplastischen Harz verteilt ist.

2. Reifenlärmverringerungseinrichtung (1) nach Anspruch 1, bei der
das Bandelement (3) auf einer Oberfläche des Geräuschabsorptionskörpers (2) angeordnet ist,
mehrere Einrastelemente (7) in einer Richtung entsprechend einer Umfangsrichtung des Bandelements (3) auf der anderen Oberfläche des Geräuschabsorptionskörpers (2) beabstandet angeordnet sind, und
die Einrastelemente (7) durch den Geräuschabsorptionskörper (2) hindurchdringen und thermisch mit dem Bandelement (3) verschweißt sind.

3. Reifenlärmverringerungseinrichtung (1) nach Anspruch 2, bei der die Einrastelemente (7) aus einer thermoplastischen Elastomermischung hergestellt sind, die ein Elastomer aufweist, das in einem thermoplastischen Harz verteilt ist.

4. Reifenlärmverringerungseinrichtung (1) nach Anspruch 3, bei der die Einrastelemente (7) von der gleichen Art an thermoplastischer Elastomermischung hergestellt sind wie diejenige des Bandelements (3).

5. Reifenlärmverringerungseinrichtung (1) nach einem der Ansprüche 2 bis 4, bei dem eine Differenz zwischen einem Schmelzpunkt der Einrastelemente (7) und demjenigen des Bandelements (3) 20°C oder weniger ist.

6. Reifenlärmverringerungseinrichtung (1) nach einem der Ansprüche 1 bis 5, bei dem eine Biegesteifigkeit des Bandelements (3) 7,5 Nm² bis 34,0 Nm² ist.

7. Reifenlärmverringerungseinrichtung (1) nach einem der Ansprüche 1 bis 6, bei dem der Geräuschabsorptionskörper (2) ein ringförmiger Körper ist, der durchgehend und einstückig in einer Umfangsrichtung des Geräuschabsorptionskörpers (2) ausgebildet ist.

8. Reifenlärmverringerungseinrichtung (1) nach einem der Ansprüche 1 bis 7, bei dem
der Geräuschabsorptionskörper (2) aus mehreren separaten Stücken ausgebildet ist, die in einer Umfangsrichtung des Geräuschabsorptionskörpers (2) verteilt sind, und
die separaten Stücke auf dem Bandelement (3) in der Umfangsrichtung beabstandet angeordnet sind.

9. Luftreifen mit der Reifenlärmverringerungseinrichtung (1) nach einem der Ansprüche 1 bis 8, die auf einer inneren Oberfläche eines Laufflächenabschnitts (5) angebracht ist.

## Revendications

1. Dispositif de réduction du bruit d'un pneumatique (1) comprenant :
un corps absorbant les sons (2) composé d'un matériau poreux, et
un élément de bande (3), approprié pour maintenir le corps absorbant les sons (2) contre une surface intérieure du pneumatique par la force élastique de restauration de l'élément de bande (3)courbé en une forme annulaire, **caractérisé en ce que** l'élément de bande (3) est composé d'une composition d'élastomère thermoplastique contenant un élastomère dispersé dans une résine thermoplastique.

2. Dispositif de réduction du bruit d'un pneumatique (1) selon la revendication 1, où
l'élément de bande (3) est agencé sur une surface du corps absorbant les sons (2),
une série d'éléments de blocage (7) sont disposés à intervalles dans la direction correspondant à la circonférence de l'élément de bande (3), sur l'autre surface du corps absorbant les sons (2), et
les éléments de blocage (7) pénètrent dans le corps absorbant les sons (2) et sont soudés thermiquement à l'élément de bande (3).

3. Dispositif de réduction du bruit d'un pneumatique (1) selon la revendication 2, où les éléments de blocage (7) sont composés d'une composition d'élastomère thermoplastique contenant un élastomère dispersé dans une résine thermoplastique.

4. Dispositif de réduction du bruit d'un pneumatique (1) selon la revendication 3, où les éléments de blocage (7) sont composés du même type de composition d'élastomère thermoplastique que celle de l'élément de bande (3).

5. Dispositif de réduction du bruit d'un pneumatique (1) selon l'une quelconque des revendications 2 à 4, où la différence entre le point de fusion des éléments de blocage (7) et celui de l'élément de bande (3) est de 20°C ou moins.

6. Dispositif de réduction du bruit d'un pneumatique (1) selon l'une quelconque des revendications 1 à 5, où la rigidité en flexion de l'élément de bande (3) se situe dans l'intervalle allant de 7,5 Nm² à 34,0 Nm².

7. Dispositif de réduction du bruit d'un pneumatique (1) selon l'une quelconque des revendications 1 à 6, où le corps absorbant les sons (2) est un corps annulaire, formé en continu et d'une pièce en direction de la circonférence du corps absorbant les sons (2).

8. Dispositif de réduction du bruit d'un pneumatique (1) selon l'une quelconque des revendications 1 à 7, où
le corps absorbant les sons (2) est formé d'une série de pièces séparées, divisées dans la direction de la circonférence du corps absorbant les sons (2), et
les pièces séparées sont disposées à intervalles sur l'élément de bande (3) en direction de la circonférence.

9. Pneumatique comprenant le dispositif de réduction du bruit d'un pneumatique (1) selon l'une quelconque des revendications 1 à 8, monté sur la surface interne d'une partie d'une bande de roulement (5).
